# EUROPEAN PATENT APPLICATION

(11) **EP 4 501 663 A1**
(43) Date of publication of application: **05.02.2025**
(21) Application number: 24191064.5
(22) Date of filing: 26.07.2024
(51) Int. Cl.: B60C 7/14, B60C 7/22, B60C 9/00, B60C 9/20

(54) **NON-PNEUMATIC TIRE**

(30) Priority: 31.07.2023 US 202318362347
(71) Applicant: The Goodyear Tire & Rubber Company, Akron, OH 44316 (US)
(72) Inventor: ZIELINSKI, Bartosz, L-7347 Steinsel (LU); MARTINS AMARAL, Thiago, L-9054 Ettelbruck (LU); SPORTELLI, Francesco, 3249 Bettembourg (LU); SALVO, Thomas, B-6637 Fauvillers (BE); LETTIERI, Joseph Carmine, Hudson, 44236 (US); ERB, Monica, Uniontown, 44685 (US); NEUMANN, Joshua, Stow, 44224 (US)
(74) Representative: Kutsch, Bernd

(57) **Abstract**

A non-pneumatic tire (1) is disclosed having a component comprising a rubber composition and at least one textile cord. The textile cord comprises yarns. The yarns are at least partially fused together to form the cords. The yarns are chosen from one or more of aramid, polyamide, polyester, polyethylene terephthalate, polyethylene naphthalate, glass fiber and carbon fiber yarns.

## Description

### Field of the Invention

The present invention is directed to a non-pneumatic tire, particularly comprising a cord reinforced rubber component, such as a shearband. The non-pneumatic tire, particularly the cord reinforced rubber component, comprises cords comprising yarns fused to one another.

### Background of the Invention

Non-pneumatic tires have some advantages over conventional pneumatic tires such as an increased tire robustness. In particular, a loss of air pressure is not possible as non-pneumatic tires do not comprise an air pressured tire cavity. While progress has been made in the development of non-pneumatic tires over the past years, significant room for improvement remains.

### Summary of the Invention

The invention relates to a non-pneumatic tire in accordance with claims 1.

Dependent claims refer to preferred embodiments of the invention.

In a first preferred aspect, the present invention is directed to a non-pneumatic tire having a rubber component comprising at least one textile cord, wherein the cord comprises yarns. A majority of the yarns are fused together in the cord, wherein the yarns are chosen from one or more of aramid, polyamide, polyester, polyethylene terephthalate, polyethylene naphthalate, glass fiber and carbon fiber yarns.

In a second preferred aspect of the present invention, the invention is directed to a non-pneumatic tire comprising a circumferential tread portion and a circumferential shearband supporting the tread portion. The shearband comprises multiple circumferential layers. At least one of said layers comprises a rubber composition reinforced by textile cords comprising yarns at least partially fused together to form the cords, wherein said yarns are chosen from one or more of aramid, polyamide, polyester, polyethylene terephthalate, polyethylene naphthalate, glass fiber and carbon fiber yarns.

In a third preferred aspect of the present invention, the invention is directed to a non-pneumatic tire comprising a circumferential tread portion and a circumferential shearband supporting the tread portion, wherein the shearband comprises multiple circumferential layers, and wherein at least one of said layers comprises a rubber composition reinforced by textile cords comprising yarns at least partially fused together to form the cords. Furthermore, the yarns are chosen from one or more of polyester, polyethylene terephthalate, and polyethylene naphthalate yarns. Still in accordance with the third aspect, the cords further comprise isocyanate, wherein the majority of the yarns are fused together by the isocyanate.

### Brief Description of the Drawings

The invention will be described by way of example and with reference to the accompanying drawings in which:
FIG. 1 is a schematic side view of a non-pneumatic tire in accordance with an embodiment of the present invention;
FIG. 2 is a schematic partial cross-section of a shearband of the tire shown in Figure 1, in a plane perpendicular to the circumferential direction;
FIG. 3 is a schematic partial cross-section of another shearband in a plane perpendicular to the circumferential direction;
FIG. 4 is a schematic partial cross-section of yet another shearband in a plane perpendicular to the circumferential direction; and
FIG. 5 is a schematic partial cross-section of still another shearband in a plane perpendicular to the circumferential direction.

### Detailed Description of Preferred Embodiments of the Invention

According to the first preferred aspect, a non-pneumatic tire has a rubber component comprising at least one textile cord (or cord), wherein the cord comprises yarns. A majority of the yarns are fused together in the cord, wherein the yarns are chosen from one or more of aramid, polyamide (such as Nylon), polyester, polyethylene terephthalate (PET), polyethylene naphthalate (PEN), glass fiber and carbon fiber yarns. In particular, such fused textile cords are very robust due to fusion of the yarns and utilized materials. Such a robustness allows provision of non-pneumatic tires with reinforced tire components having a relatively low number of cords, particularly if compared to similar components comprising textile cords of other types. For instance, the tire component can be a shearband but could also be a component of the supporting structure of the tire.

In one embodiment, the cord further comprises (an) isocyanate wherein the majority of the yarns are fused together by the isocyanate, preferably, at least through at least 50%, or even more preferably through at least 75% or at least 90%, of a maximum diameter of the cord (measured perpendicular to the length of the cord, wherein fusion is observable in a perpendicular cross-section of the cord, e.g., by reflection light microscopy, or by UV-light luminescence spectroscopy, or equivalent).

In another embodiment, the cord is chemically fused, such as fused by isocyanate. For instance, it is possible to submerge the cord into an isocyanate bath.

In still another embodiment, the isocyanate is dissolved in an organic solvent, such as toluene, hexane, cyclohexane, or the like.

In still another embodiment, the isocyanate is dispersed in an aqueous dispersion. The isocyanate is exposed to the cord in a sufficient concentration to effect a chemical fusing together of the individual cord yarns.

In still another embodiment, the isocyanate is used in an organic solvent solution in a concentration ranging from 15 to 25 percent by weight, based on the total weight of the solution.

In still another embodiment, the isocyanate is used in an aqueous dispersion in a concentration ranging from 15 to 25 percent by weight, based on the total weight of the dispersion.

In still another embodiment, the isocyanate is a blocked isocyanate. The blocked isocyanate may be any suitable blocked isocyanate known to be used in RFL adhesive dips including, but not limited to, caprolactam blocked methylene-bis-(4-phenylisocyanate), such as Grilbond-IL6 available from EMS American Grilon, Inc., and phenol formaldehyde blocked isocyanates as disclosed in US 3,226,276; US 3,268,467; and US 3,298,984. As a blocked isocyanate, use may be made of reaction products between one or more isocyanates and one or more kinds of isocyanate blocking agents. For instance, the isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, mphenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc. Isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as ε-caprolactam, δ-valerolactam, and butyrolactam, ureas such as urea and diethylene urea, oximes such as acetoxime, cyclohexanoxime, benzophenon oxime, and α-pyrolidon.

In still another embodiment, the textile cord is exposed to the isocyanate by dipping the cord into the solution or dispersion of isocyanate. In either case, the dry cord is preferably drawn through a bath of isocyanate dipping liquid at a rate sufficient to preferably allow essentially complete penetration of the isocyanate-containing liquid into the voids between the yarns. In this way, it is intended that the isocyanate is exposed to all of the yarn surface area, and essentially full wetting of the yarn surfaces is achieved. The appropriate rate of cord movement through the isocyanate dipping liquid to achieve such penetration and wetting may be determined by one skilled in the art without undue experimentation.

In another embodiment, after dipping in the isocyanate bath, the cord is exposed to heat and/or air to allow removal of the solvent (or water in the case of an aqueous dispersion of isocyanate). Sufficient heat and time are used to allow the individual yarns to fuse together under the influence of the isocyanate. Optionally, the chemically fused cord is then wound on a spool for storage.

In another embodiment, the yarns are one or more of multifilament yarns and monofilament yarns (consisting only of a single filament). In still another embodiment, the yarns are multifilament yarns. In still another embodiment, the yarns are monofilament yarns.

In another embodiment, the cord essentially consists of the isocyanate and the yarns, optionally with an RFL (resorcinol formaldehyde latex) adhesive and/or surface coating.

In still another embodiment, the cord further comprises an adhesive at least partially on a surface of the cord. In other words, the cord may be coated, or particularly dip-coated, such as with an RFL adhesive. Such an adhesive improves the adhesion between the cords and a rubber composition, e.g., calendared onto the fused cords, for instance to form a layer or sheet/band of cord reinforced rubber.

In a preferred embodiment, each of the yarns has a linear density within a range of 800 dtex to 2200 dtex, preferably within a range of 900 dtex to 1900 dtex, or within a range of 900 dtex to 1700 dtex, or within a range of 900 dtex to 1300 dtex, or within a range of 1000 dtex to 1200 dtex. In one embodiment the cord has a linear density within a range of 1050 dtex to 1150 dtex.
1 dtex, or 1 decitex, means a weight of 1 gram (g) per 10000 meters (m) of a yarn (before twisting/untwisted yarn), or equivalent, as known in the art of textile cords.

In a preferred embodiment, the cord is formed by 3 to 10, or 4 to 10, or 5 to 10, or 6 to 10, or 7 to 10, or preferably 8 to 10 yarns twisted together to form the cord. In other words, the cord preferably comprises 8 to 10 yarns, particularly 8, 9, or 10 yarns, wherein 9 yarns are particularly preferred.

In a preferred embodiment, the cord has a twist factor within a range of 1 TPI (twist per 2.54 cm) to 4 TPI, or from 1 TPI to 3 TPI, or from 1.5 TPI to 2.5 TPI.

In a preferred embodiment, the cord is formed by 8 to 10 yarns twisted together to form the cord, wherein each yarn has a linear density within a range of 800 dtex to 2200 dtex, and wherein the cord has a twist factor of 1 TPI to 4 TPI. The above-mentioned preferred ranges can also be applied here.

In a preferred embodiment, the cord has a construction selected from 1100/9, 1100/8, 1100/7, 940/2/3, 940/3/3, 940/9, 1100/2/3, 1100/3/3, 1100/3/4, 1670/6, 1670/2/3, 2200/3, and 2200/2/2.

In a preferred embodiment, the cord has a (total) linear density within a range of 6000 dtex to 14000 dtex, preferably within a range of 8000 dtex to 12000 dtex, or from 9000 dtex to 11000 dtex.

In a preferred embodiment, the yarns are PET yarns. This is a preferred material herein.

In a preferred embodiment, the cord comprises two types of the listed yarns so as to form a hybrid cord, wherein optionally one type of yarns in the cord is a PET yarn.

In a preferred embodiment, the cord has a stiffness within a range of 3000 mg to 15000 mg, or 5000 mg to 15000 mg, determined in accordance with ASTM D1388.

In a preferred embodiment, the cord has a maximum diameter within a range of 1 mm to 2 mm, preferably 1 mm to 1.5 mm, or 1.1 mm to 1.4 mm.

According to the second preferred aspect of the present invention, a non-pneumatic tire comprises a circumferential tread portion, a circumferential shearband supporting the tread portion, wherein the shearband comprises multiple circumferential layers, e.g., also called shear layers. At least one of said layers comprises a rubber composition reinforced by textile cords (or cords) comprising yarns at least partially fused together to form the cords. Preferably, a majority of the yarns can be fused together to form the cords, or in other words each cord. The yarns are chosen from one or more of aramid, polyamide, polyester, polyethylene terephthalate, polyethylene naphthalate, glass fiber and carbon fiber yarns.

In a preferred embodiment, the cords are arranged essentially in parallel to one another in said at least one of the layers. For instance, they may be arranged essentially in parallel in a plane, e.g., in parallel to a surface of said layer, such as a radially upper surface of said layer.

In another preferred embodiment, the cords are provided in the at least one of the layers with (a cord density of) 1.5 to 20 ends per inch (EPI), or 1.5 to 15 EPI, preferably 8 to 12 EPI.

In still another preferred embodiment, each cord has one or more of: a number of twisted yarns, a linear yarn density, a twist factor, a cord construction, and a stiffness as mentioned already herein above in embodiments in relation to the first aspect of the invention.

In still another preferred embodiment, each layer (provided that it is cord reinforced) comprises a plurality of parallel cords (e.g., arranged in a plane) which are calendered with a rubber composition (e.g., in a rubber calender machine). In particular, the plurality of parallel cords is preferably calendered from two sides with the rubber. Calendering as such is known in the tire art.

In still another preferred embodiment, the rubber composition may comprise one or more rubbers or elastomers, such as one or more of natural rubber, synthetic polyisoprene, polybutadiene rubber, and styrene butadiene rubber. Optionally, the rubber composition additionally comprises a filler, such as one or more of carbon black and silica. Still optionally, the rubber composition further comprises one or more of oil, resins, processing aids, vulcanization accelerators, antidegradants, zinc oxide, and sulfur. The rubber composition may comprise further ingredients.

In still another preferred embodiment, said layer has a radial thickness within a range of 1 mm to 3 mm, preferably within a range of 1.5 mm to 2.5 mm. In other words, this is the radial thickness of the layer including the rubber composition reinforced by the cords, e.g., the calendered layer.

In still another preferred embodiment, the shearband comprises at least two layers comprising the textile cords or cords.

In still another preferred embodiment, the shearband comprises at least one radially inner belt layer comprising (optionally a rubber composition reinforced by, preferably parallel) metal cords; at least one radially outer belt layer comprising (optionally a rubber composition reinforced by, preferably parallel) metal cords. Optionally, the at least one of said layers comprising the textile cords is arranged between the at least one radially inner belt layer and the at least one radially outer belt layer. For instance, the shearband can comprise one, two, three or four of said layers comprising the textile cords between said belt layers. Optionally, two radially neighboring layers comprising the textile cords are spaced from each other by one or more further layers which are devoid of a cord reinforcement.

In still another preferred embodiment, the at least one radially outer belt layer is reinforced by metal cords having angles with the circumferential direction of the tire within a range of 10° to 40°, preferably within a range of 10° to 30°, or even more preferably within a range of 15° to 25°. In addition, or alternatively, the at least one radially inner belt layer is reinforced by metal cords having an angle with the circumferential direction of the tire which is at most 5°, preferably at most 2°.

In still another preferred embodiment, the shearband comprises at least two (preferably two) radially outer belt layers reinforced by metal cords having opposite angles with the circumferential direction of the tire within a range of 10° to 40°, preferably within a range of 10° to 30°, or even more preferably within a range of 15° to 25°. In addition, or alternatively, the shearband comprises at least two radially inner belt layers reinforced by metal cords having, optionally opposite, angles with the circumferential direction of the tire of at most 5°, preferably of at most 2°.

In still another preferred embodiment, one or more of the belt layers have multiple metal cords provided within a range of 5 EPI to 40 EPI, preferably 10 EPI to 30 EPI.

In still another preferred embodiment, each of said belt layers and/or layers comprising the at least one cord have a radial thickness within a range of 1 mm to 3 mm, preferably within a range of 1.5 mm to 2.5 mm.

In still another preferred embodiment, such layers are radially spaced by one or more rubber layers, which are preferably devoid of a cord reinforcement.

In still another preferred embodiment, rubber layers which are devoid of cord reinforcement have a radial thickness within a range of 0.2 mm to 1.5 mm, preferably within a range of 0.3 mm to 1 mm, or within a range of 0.3 mm to 0.7 mm.

In yet another preferred embodiment, layers comprising the textile cords and layers which are devoid of cord reinforcement are provided alternatingly (and/or radially) on top of one another. In particular, such an embodiment comprising additional layers which are devoid of cord reinforcement may help to provide lightweight shearbands and/or tires. The robust textile cords in the textile cord reinforced rubber layers can help to provide desired stability or stiffness to the shearband. Optionally, the layers in this embodiment are provided radially between one or more radially inner belt layers and one or more radially outer belt layers, if present.

In yet another preferred embodiment, the shearband comprises only layers comprising the textile cords radially between the at least one radially outer belt layer and the at least one radially inner belt layer. Optionally, it comprises at least three, preferably at least five, and/or at most 12, preferably at most 10, of the layers comprising the textile cords. In one embodiment, the shearband comprises six layers comprising the textile cords.

In still another preferred embodiment, the shearband comprises radially adjacent pairs of layers comprising textile cords and of rubber layers being devoid of cord reinforcements. For instance, the shearband comprises two radially adjacent layers comprising the textile cords (or, in other words, a first pair of layers comprising the textile cords), and two further radially adjacent layers comprising the textile cords (or, in other words, a second pair of layers comprising the textile cords), and wherein optionally two radially adjacent layers which are devoid of cord reinforcements (in other words, a pair of layers devoid of cord reinforcements / non-reinforced layers) is provided radially between i) the two radially adjacent layers comprising the textile cords and ii) the two further radially adjacent layers comprising the textile cords (or radially between both pairs of layers comprising the textile cords).

In still another preferred embodiment, a stack of at least two (preferably two) adjacent layers comprising the textile cords has on each radial side at least one (preferably one) rubber layer which is devoid of cord reinforcement. Optionally, a further layer reinforced by the textile cords, is provided adjacent a radially inner belt layer and a radially outer belt layer, e.g., also adjacent a respective one of the rubber layers devoid of cord reinforcement.

In still another preferred embodiment, the shearband comprises at least two layers comprising the textile cords, wherein the at least two layers are arranged (radially) between the at least one radially inner belt layer and the at least one radially outer belt layer.

In still another preferred embodiment, the layers described herein extend in the circumferential direction and/or in an axial direction. A thickness of such layers is measured in the radial direction of the tire.

In accordance with the third preferred aspect, the invention is directed to a non-pneumatic tire comprising a circumferential tread portion and a circumferential shearband supporting the tread portion, wherein the shearband comprises multiple circumferential layers, and wherein at least one of said layers (preferably, at least two) comprises a rubber composition reinforced by textile cords comprising yarns at least partially fused together to form the cords. Furthermore, the yarns are chosen from one or more of polyester, polyethylene terephthalate, and polyethylene naphthalate yarns (preferably, polyethylene terephthalate yarns). Still in accordance with the third aspect, the cords further comprise isocyanate, wherein the majority of the yarns (particularly in each cord) are fused together by the isocyanate.

It is emphasized that all features and embodiments of the above aspects may be combined with one another.

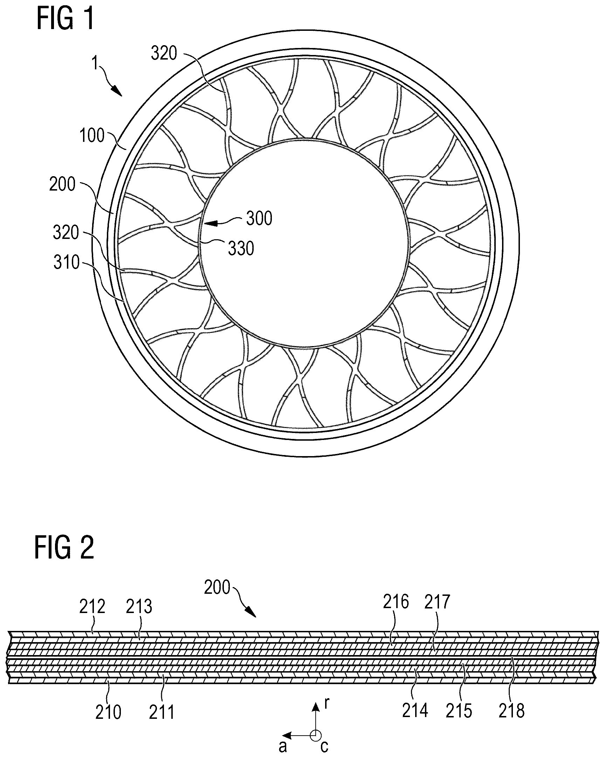

Figure 1 shows a non-pneumatic tire 1 in accordance with a preferred embodiment of the present invention. Tire 1 has a circumferential tread 100 circumferentially supported by a radially inner shearband 200, which is in contact with a circumferential support structure 300. The support structure 300 comprises a radially inner circumferential hub portion 330 (mountable on a rim, e.g., a metal rim - not shown herein), and a radially outer circumferential ring/band portion 310 circumferentially in contact with and supporting the shearband 200. Furthermore, the supporting structure 300 comprises a plurality of supporting elements or spokes 320, which extend from the hub portion 330 to the radially outer circumferential ring or band portion 310. For instance, the supporting structure 300 may comprise rubber and/or thermoplastic materials. The shearband 200 preferably has multiple layers as further shown in the example of Figure 2 hereinbelow. The tread 100 preferably comprises one or more rubber compositions.

Figure 2 schematically shows a schematic cross-section of the shearband 200, wherein the present embodiment comprises a plurality of layers extending essentially in an axial and/or circumferential direction. These layers are stacked in the radial direction on top of one another.

The axial direction "a" is parallel to the axis of rotation of the tire 1. The radial direction "r" is perpendicular to the axial direction "a" and the circumferential direction "c" as indicated in Figure 2. These directions are not necessarily limited to a specific orientation though, unless described otherwise herein.

In the specific example of Figure 2, the shearband 200 has nine layers arranged radially on top of one another. In this specific example, the radially outer layers of the shearband 200 are radially outer belt layers 212, 213, wherein each radially outer belt layer 212, 213 comprises a metal reinforcement, herein arranged at a low angle with the circumferential direction of the tire 1, such as an angle smaller than 2°. Thus, each of the radially outer belt layers 212, 213 comprises a rubber composition reinforced by metal cords, preferably obtained with a calender unit. Similarly, radially inner belt layers 210, 211 are also reinforced by metal cords. Preferably, such metal cords are oriented in parallel to one another and extend with an angle of less than 2° with respect to the circumferential direction of the tire 1. Metal cords are preferably made of steel and optionally additionally brass coated. The metal cords are provided herein with an EPI (ends per 2.54 cm) range of 11 to 15 EPI, preferably with 13 EPI.

Furthermore, the shearband 200 comprises four textile cord reinforced layers 214, 215, 216, 217. These textile cords comprise PET yarns chemically fused together with isocyanate. The preferred cord construction in this embodiment is 1100/9. Moreover, the cords are dip-coated with an RFL adhesive to improve cord-rubber bonding. In each textile cord reinforced layer 214, 215, 216, and 217, the textile cords are essentially arranged in parallel to one another with a cord density in the layer of 10 EPI. Each layer214, 215, 216, and 217 comprises or consists of a rubber composition comprising said textile cords, e.g., also prepared in a rubber calender machine. Each of those layers 214, 215, 216, and 217 may comprise the same rubber composition.

In the present example, the radial thickness of all layers 210, 211, 212, 213, 214, 215, 216, 217, apart from layer 218, is 2 mm. Non-reinforced layer 218, which is provided in the radial center of the shearband 200, is made of a rubber composition without cord reinforcement. The radial thickness of non-reinforced rubber layer 218 is 0.5 mm. Thus, preferably, the radial thickness of the whole shearband 200 is within a range of 15 mm to 18 mm, or even more preferably, within a range of 15.5 mm to 17.5 mm.

Optionally, and not explicitly shown herein, the shearband 200 has an additional layer, e.g., having a radial thickness of 1 mm, facing the supporting structure 300, particularly the radially outer circumferential ring portion 310. Such an additional layer may be a layer comprising a rubber composition increasing the tack (or bond) to the radially outer circumferential ring portion 310, which may be mentioned herein as a bond layer. Such an additional layer can also be applied to the shearbands of other embodiments mentioned herein.

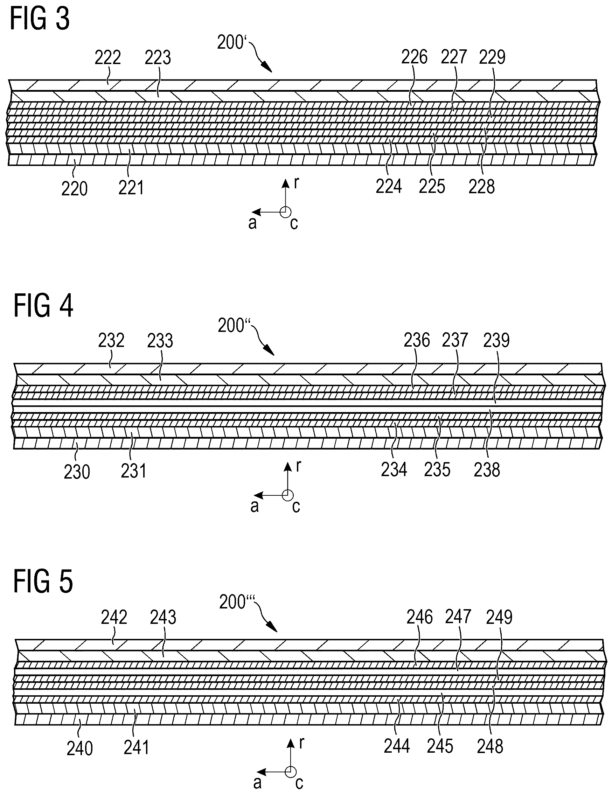

Figure 3 shows another shearband 200' for a tire in accordance with an embodiment of the present invention. In this embodiment, the shearband 200' has two radially inner belt layers 220, 221, which are each reinforced by parallel metal cords. In particular, these metal cords have a low angle with the circumferential direction of tire, e.g., as mentioned already above in relation to the shearband 200. Each of the radially outer belt layers 222, 223 comprises also essentially parallel metal cords. However, contrary to the previous embodiment, the metal cords of the belt layer 222 are arranged at an angle of 23° with the circumferential direction of the tire. Moreover, the belt layer 223 comprises metal cords arranged at an angle of 23° (with the circumferential direction of the tire) which is oppositely oriented to the angle of the metal cords of the belt layer 222.

Six radially adjacent textile cord reinforced rubber layers 224, 225, 226, 227, 228, 229 are arranged between the radially inner belt layers 220, 221 and the radially outer belt layers 222, 223. The textile cords as such correspond in this embodiment to those already mentioned in relation to the embodiment of Figure 2.

While Figure 3 shows six adjacent layers reinforced with textile cords, it is possible in other embodiments not shown herein to have more of such layers, e.g., from 3 to 9 of such layers, such as 3 adjacent textile cord reinforced layers, or 9 adjacent textile cord reinforced layers. The belt construction can, for instance, be the same as shown in Figure 3.

Figure 4 shows another shearband 200" for a tire in accordance with another embodiment of the present invention. In this embodiment, the shearband 200" has two radially inner belt layers 230, 231, which are each reinforced by parallel metal cords. Preferably, these metal cords have a low angle with the circumferential direction of tire, e.g., as mentioned already above in relation to the shearbands 200 and 200'. Each of the radially outer belt layers 232, 233 comprises also essentially parallel metal cords. The metal cords of the first radially outer belt layer 232 are again arranged at an angle of 23° with the circumferential direction of the tire. The second radially outer belt layer 233 also comprises metal cords but again arranged at an angle of 23° (with the circumferential direction of the tire) which is oppositely oriented to the angle of the metal cords of the first radially outer belt layer 232.

While the shearband 200" according to Figure 4 comprises also six layers between the radially outer belt layers 232, 233 and the radially inner belt layers 230, 231, the shearband 200" comprises two non-(cord-)reinforced rubber layers 238, 239 and four textile cord reinforced rubber layers 234, 235, 236, 237. Optionally, the two non-reinforced rubber layers 238, 239 could also be integrally formed as a single rubber layer having twice the radial thickness than each of the non-reinforced rubber layers 238, 239. The textile cords can be cords as mentioned in other embodiments herein.

Figure 5 shows yet another shearband 200‴ for another tire in accordance with yet another embodiment of the present invention. The radially outer belt layers 242, 243 and the radially inner belt layers 240, 241 have the same construction as the corresponding layers in the embodiment of Figure 4. Figure 5 has again six layers arranged between the radially outer belt layers 242, 243 and the radially inner belt layers 240, 241. Moreover, four of these layers are textile cord reinforced rubber layers 244, 246, 248, and 249. Two further layers are not reinforced by cords, i.e., non-reinforced layers 245, 247. In contrast to the embodiment of Figure 4, the two layers in the radial center of the shearband 200‴ according to Figure 5 are the textile cord reinforced layers 248, 249, whereas the two radially adjacent layers 245, 247 are non-reinforced layers. The provision of non-reinforced layers can for instance be used to adjust the stiffness of the shearband.

In one example, a shearband and a tread can be cured together at the same time. In such an example, the uncured ("green") tread is preferably placed on top of the green shearband and both are cured in a mold together. It is possible that a cured shearband is attached to a supporting structure by way of an adhesive. Alternatively, it is possible to cure the green tread, shearband and supporting structure (e.g., supporting the tread and shearband on a wheel hub) together.

A shearband (which is considered herein as an example for a rubber component) can also be described as a cord-reinforced circumferential band comprising multiple (stacked) circumferential rubber layers. In particular, a majority of these rubber layers are reinforced by cords (e.g., including metal and/or textile cords).

Tables 1 to 3 show further exemplary embodiments of layered structures of shearbands in accordance with the present invention.

The first column shows the radial order of layers from a supporting structure of the tire towards the tread. The second column defines the type of rubber layer. The third column provides information about the number/density of parallel cords in the respective layer and the fourth column lists the radial thickness of each layer.

**TABLE 1**

| **Layer no.** | **Layer types** | **Cord density in layers** | **Radial thickness of layers** |
|---|---|---|---|
| | | **[EPI]** | **[mm]** |
| | | | (together 16.8 mm) |
| 1 | Bond layer | 0 | 0.8 |
| 2 | Metal cord reinforced layer | 13 | 2.0 |
| 3 | Metal cord reinforced layer | 13 | 2.0 |
| 4 | Fused textile cord reinforced layer | 10 | 1.9 |
| 5 | Fused textile cord reinforced layer | 10 | 1.9 |
| 6 | Non-reinforced rubber layer | 0 | 0.4 |
| 7 | Fused textile cord reinforced layer | 10 | 1.9 |
| 8 | Fused textile cord reinforced layer | 10 | 1.9 |
| 9 | Metal cord reinforced layer | 13 | 2.0 |
| 10 | Metal cord reinforced layer | 13 | 2.0 |

**TABLE 2**

| **Layer no.** | **Layer types** | **Cord density in layers** | **Radial thickness of layers** |
|---|---|---|---|
| | | **[EPI]** | **[mm]** |
| | | | (together 16.1 mm) |
| 1 | Bond layer | 0 | 0.8 |
| 2 | Metal cord reinforced layer | 13 | 2.0 |
| 3 | Metal cord reinforced layer | 13 | 2.0 |
| 4 | Non-reinforced rubber layer | 0 | 0.4 |
| 5 | Fused textile cord reinforced layer | 10 | 1.9 |
| 6 | Non-reinforced rubber layer | 0 | 0.4 |
| 7 | Fused textile cord reinforced layer | 10 | 1.9 |
| 8 | Non-reinforced rubber layer | 0 | 0.4 |
| 9 | Fused textile cord reinforced layer | 10 | 1.9 |
| 10 | Non-reinforced rubber layer | 0 | 0.4 |
| 11 | Metal cord reinforced layer | 13 | 2.0 |
| 12 | Metal cord reinforced layer | 13 | 2.0 |

**TABLE 3**

| **Layer no.** | **Layer types** | **Cord density in layers** | **Radial thickness of layers** |
|---|---|---|---|
| | | **[EPI]** | **[mm]** |
| | | | (together 16.6 mm) |
| 1 | Bond layer | 0 | 0.8 |
| 2 | Metal cord reinforced layer | 13 | 2.0 |
| 3 | Metal cord reinforced layer | 13 | 2.0 |
| 4 | Non-reinforced rubber layer | 0 | 0.4 |
| 5 | Fused textile cord reinforced layer | 10 | 1.9 |
| 6 | Non-reinforced rubber layer | 0 | 0.4 |
| 7 | Non-reinforced rubber layer | 0 | 0.4 |
| 8 | Fused textile cord reinforced layer | 10 | 1.9 |
| 9 | Non-reinforced rubber layer | 0 | 0.4 |
| 10 | Metal cord reinforced layer | 13 | 2.0 |
| 11 | Metal cord reinforced layer | 13 | 2.0 |

As shown in the different embodiments of shearbands, including those shown in above Tables 1 to 3, it is preferably possible to provide different orders or sequences of layers comprising fused cords and non-reinforced rubber layers, particularly between metal cord reinforced layers or belt layers. Such arrangements allow an adaption of the shearband's overall properties, such as stiffness and/or weight, to a desired level for a non-pneumatic tire to be provided.

While the above Tables 1 to 3, and further embodiments mentioned herein, include metal cord reinforced layers, in alternative embodiments, these layers are replaced by fused (textile) cord reinforced layers.

The present invention and/or its embodiments help to provide robust non-pneumatic tires, particularly with robust/improved shearbands. For instance, it is possible to provide stiff and/or light weight shearbands, which can also help to reduce rolling resistance.

The features of the above-mentioned aspects and/or embodiments may be combined with one another.

## Claims

1. A non-pneumatic tire having a component comprising a rubber composition and at least one textile cord, wherein the textile cord comprises yarns, wherein the yarns are at least partially fused together to form the cords, and wherein the yarns are chosen from one or more of aramid, polyamide, polyester, polyethylene terephthalate, polyethylene naphthalate, glass fiber and carbon fiber yarns.

2. The non-pneumatic tire according to claim 1, wherein the majority of said yarns are fused together in the textile cord, or wherein the cord further comprises isocyanate and wherein the majority of the yarns are fused together by the isocyanate.

3. The non-pneumatic tire according to claim 1 or 2, wherein the cord further comprises an RFL adhesive at least partially on a surface of the cord.

4. The non-pneumatic tire according to at least one of the previous claims, wherein each of the yarns has a linear density within a range of from 800 dtex to 2200 dtex.

5. The non-pneumatic tire according to at least one of the previous claims, wherein the cord is formed by 8 to 10 yarns twisted together to form the cord and/or wherein the cord has a twist factor within a range of from 1 turn per 2.54 cm to 4 turns per 2.54 cm.

6. The non-pneumatic tire according to at least one of the previous claims, wherein the cord has a construction selected from 1100/9, 1100/8, 1100/7, 940/2/3, 940/3/3, 940/9, 1100/2/3, 1100/3/3, 1100/3/4, 1670/6, 1670/2/3, 2200/3, and 2200/2/2.

7. The non-pneumatic tire according to at least one of the previous claims, wherein the cord has a stiffness within a range of from 3000 mg to 15000 mg, as determined in accordance with ASTM D1388; and/or wherein the cord has a maximum diameter within a range of from 1 mm to 2 mm.

8. The non-pneumatic tire comprising according to at least one of the previous claims having a circumferential tread portion (100), wherein the component is a circumferential shearband (200) supporting the tread portion (100).

9. The non-pneumatic tire of claim 8 wherein the shearband (200) comprises multiple circumferential layers (210, 211, 213, 214, 215, 216, 217, 218), and wherein at least one or at least two of said layers (214, 215, 216, 217, 218) comprises said rubber composition and said at least one textile cord.

10. The non-pneumatic tire according to claim 9, wherein the textile cords are arranged essentially in parallel to one another at least one of said layers (214, 215, 216, 217, 218), with a density in a range of from 1.5 ends per 2.54 cm to 20 ends per 2.54 cm, preferably 7 ends per 2.54 cm to 15 ends per 2.54 cm.

11. The non-pneumatic tire according to claim 9 or 10, wherein the at least one of said layers (210, 211, 213, 214, 215, 216, 217, 218) has a radial thickness within a range of from 1 mm to 3 mm.

12. The non-pneumatic tire according to at least one of the previous claims 9 to 11, wherein the shearband (200) comprises at least one radially inner belt layer (210, 211) comprising metal cords preferably having an angle with a circumferential direction of the tire (1) which is smaller than 2°; at least one radially outer belt layer (212, 213) comprising metal cords preferably having an angle with the circumferential direction of the tire which is within a range of 10° and 40°; and wherein the at least one of said layers (214, 215, 216, 217, 218), comprising the textile cords is arranged between the at least one radially inner belt layer (210, 211) and the at least one radially outer belt layer (212, 213).

13. The non-pneumatic tire according to at least one of the previous claims 9 to 12, wherein each of said textile cord reinforced layers (214, 215, 216, 217, 218), has a thickness within a range of from 1 mm to 3mm.

14. The non-pneumatic tire according to at least one of the previous claims 9 to 12, wherein the shearband (200) comprises at least two layers (214, 215, 216, 217, 218) comprising said rubber composition and said at least one textile cord, wherein said at least two layers (214, 215, 216, 217, 218) are arranged between least one radially inner belt layer (210, 211) and at least one radially outer belt layer (212, 213).
